# EUROPEAN PATENT APPLICATION

(11) **EP 1 811 108 A1**
(43) Date of publication of application: **25.07.2007**
(21) Application number: 06252044.0
(22) Date of filing: 12.04.2006
(51) Int. Cl.: E05B 63/12

(54) **Locking mechanism**

(30) Priority: 18.01.2006 GB 0601021
(71) Applicant: PBT (IP) Limited, Harlow, Essex CM20 2BN (GB)
(72) Inventor: Powell, Simon, Royston, Herts SG8 5EP (GB)
(74) Representative: Crawford, Andrew Birkby

(57) **Abstract**

A mechanism for controlling the stroke of a reciprocable member, comprising a base member provided with an elongate recess, a reciprocable member located within the recess and extending from the open end of the recess, the reciprocable member comprising first and second relatively moveable parts, one part located for reciprocation within the other, the said other part being provided with a transversely moveable projecting member, the wall of the elongate recess being shaped to cause the projecting member to move as a result of reciprocation of the said other member, and said one part being shaped so that transverse movement of a projecting member is inhibited or permitted depending on the relative positions of the one and other parts of the reciprocable member.

## Description

The present invention relates to a locking mechanism and more particularly an electrically controlled locking mechanism suitable for general use but especially doors.

There are many applications where it is desirable to change the state of a mechanism using low amounts of energy but still achieve a strong locking action. There are many examples of electrically controlled mechanically operated locks and the use of piezo actuators in such locks has already been described in WO 2003/087503.

Where high strength and accurate operation is required, the use of ground steel balls in the locking mechanism is recognised good practice. The use ball bearings as locking elements is known and devices such as the pit pin use a plurality of balls in radial channels to interface with an annular groove in a mating part such as a sleeve. A locking pin is inserted to force the balls into the annular groove and thereby achieve a threadless locking condition.

Release of a pit pin type assembly may be effected by the forcible retraction of the central locking pin which creates a space into which the balls may fall reducing the effect of diameter and allowing extraction of the main pin. Pit pins are used in aviation for emergency release and in marine applications where their ability to operate even when corroded is attractive. However, the pit pin and similar mechanisms often require manual operation to change their state and, whether attraction of the main pin is done automatically, the forces involved are relatively high demanding a large actuator.

It would be beneficial to provide an electrically controlled, ball bearing locked mechanism to bring together the benefits of reliability and external control. More particularly, it would be beneficial to provide for piezo actuation in view of the low power consumption of such devices.

According to the present invention there is provided a locking mechanism having an axially acting component located within a cylindrical bore, the axially acting component being provided with at least one and preferably a plurality of radially moveable balls made from metal or any other suitable hard material, relative movement between the axially acting component and the internal surface of the cylindrical bore controlling the radial movement of the ball or balls.

Preferably, the cylindrical bore has two different diameter portions joined by a conical section. The axially acting component is a sliding fit in the smaller of the two portions.

Located within the axially moveable part there is further provided a control pin having two different cross sectional shapes one of which is arranged to allow the ball or balls to fit within the circumference of the axially acting component and the larger of which is sufficient to force the ball or balls out beyond the circumference of the axially acting component whereby the axially acting component with its associated control pin is free to slide within the larger diameter of the cylindrical bore but not the reduced diameter portion.

The control pin is resiliently biased such that in its default condition, the larger cross sectional portion is beneath the ball or balls and in this form the assembly of control pin and axially acting component cannot proceed beyond the conical section of the cylindrical bore.

Axial movement of the assembly is controlled by means of a transversally moveable blocking component which limits the axial movement of the control pin to cause relative movement between the axially acting component and the control pin so that the radial movement of the ball or balls is dependent on the position of the blocking component.

In order that the present invention be more readily understood, an embodiment thereof will now be described by way of example with reference to the accompanying drawings in which
Fig. 1 shows a cross sectional side view of a locking mechanism according to the present invention;
Fig. 2 shows a perspective view of a component of the locking mechanism shown in Fig. 1;
Fig. 3 shows a part of the locking mechanism shown in Fig. 1 in a first condition;
Fig. 4 shows the same portion of the locking mechanism as shown in Fig. 3 but in a second condition.

The preferred embodiment of the present invention is an electrically controlled mechanical locking device. It is based on a construction in which an axially slideable member provided with one or more ball bearings such that the ball bearings can be moved in a direction transverse to the axial direction of movement of the member is located in a shaped bore. Nested within the axially moveable member is a shaped control member which is relatively moveable with respect to the axially moveable member between first and second positions in which the transverse movement of the or each ball bearing is permitted and inhibited. Relative movement between the two members is controlled by a blocking component which is electrically actuated preferably by means of a piezo ceramic actuator which may be in the form of a hairpin or counter lever arrangement.

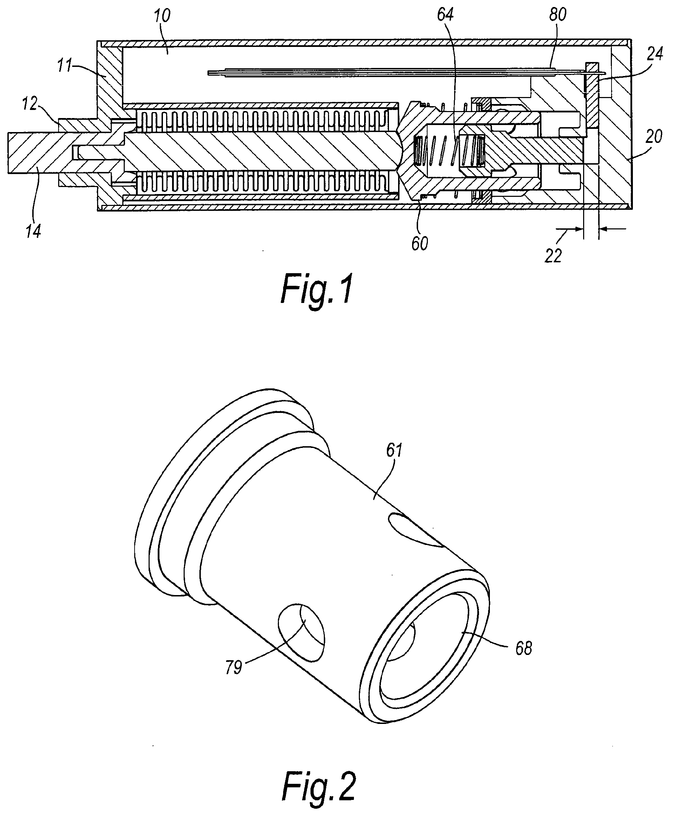

Turning now to the drawings, Figure 1 shows a cross sectional side view of a locking mechanism according to the preferred embodiment. The mechanism comprises a housing 10 which is generally rectangular in cross section. The housing itself may be of any particular cross sectional shape which is appropriate but in this embodiment it is assumed that all the parts are circular parts. It is conceivable that they may be some other shapes such as square but for convenience we will describe all the parts as being circular. One end 20 of the housing 10 constitutes a closed headstock and the other end is closed by a member 11 having an aperture 12 through which an output shaft 14 of the mechanism extends.

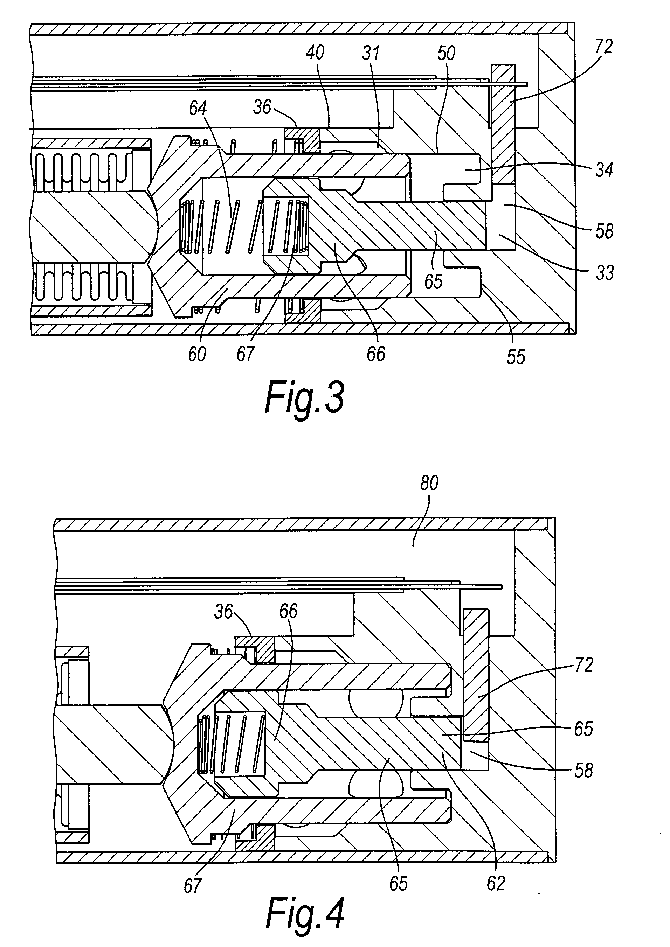

The headstock 20 comprises two coaxial bores 30 and 33 which thus form an annular wall 34. It is to be noted that the exterior of the bore 30 is spaced from the housing 10. The bore 30 is of larger diameter than the bore 33 and is formed as two axially spaced portions having different diameters joined by a chamfered transition 31 between them. The angle of the chamfer is not particularly important but is conveniently 45°. The larger diameter portion is indicated by the reference numeral 40 in Figs. 3 and 4 whereas the smaller diameter portion of the bore is indicated by the reference numeral 50 in Figs. 3 and 4. The smaller diameter portion of the bore terminates in a perpendicular end 55 and it is to be noted that the smaller diameter bore 33 extends beyond the end 55 further into the headstock 20 body. The smaller diameter bore will now be called the decision bore 33. A switching bore 65 is provided which extends through the headstock 20 in a direction transverse to the axis of the bores 30 and 33 and intersects the bore 33. The open end of the larger diameter portion of the bore 30 is closed by a member 36.

Interfacing with the headstock is an assembly called the input plunger 60 which comprises four parts - a main body 61, a control pin 62, a plurality of ball bearings 63 and a bias spring 64. The main body 61 is shown in detail in Fig. 2 where it will be seen to be a generally tubular member closed at one end and having an axial bore 68 which receives the control pin 62. The cylindrical wall of the main body 61 is provided with one or more radial bores 79 each of which is arranged to receive a respective ball bearing in such a manner as to permit the ball to run freely within the respective bore. Consequently, the diameter of the radial bores is approximately equal to the diameter of the ball bearing which it receives.

The control pin 62 which is received within the bore 68 is a cylindrical component having three axially disposed portions along its length. The first portion constitutes a tail portion 65 which is of a diameter so as to be a running fit within the bore 33. It is also of an axial length so as to create a space between its external surface and the smaller diameter portion 50 of the bore 30, which space is equal to twice the diameter of the ball bearings. The control pin has a further portion which constitutes a head portion 67 of the control pin. This portion is a running fit within the bore 68 of the main body 61 and is arranged to form a spring seat for one end of the bias spring 64, the other end of which abuts the closed end of the bore 68 of the main body 61. Between the head and tail portions of the control pin 62 is an intermediate portion whose diameter lies between that of the head portion and that of the tail portion. This diameter lies between the diameters of the two adjacent portions and is larger than the diameter of the tail portion by approximately the diameter of a ball bearing. There is a chamfered transition between the outer diameter of the intermediate portion and the outer diameter of the tail portion. In the assembled condition, the bias spring 64 acts between the main body 61 and the control pins 62 to force the control pin in a direction away from the closed end of the bore 68 of the main body. The plurality of ball bearings within the input plunger are contained within the radially disposed bore 69 and the thickness of the cylindrical wall of the main body is such that it is smaller than the diameter of the ball bearings but greater than their radius.

If in the above disposition and dimensions, it will be apparent that in the assembled condition, when the control pin is in a position such that its intermediate portion is in contact with the bearing balls, they will protrude beyond the outer diameter of the main body 61 but when the control pin is in a further position where the tail portion of the control pin is in contact with the bearing balls, the bearing balls can be retracted within the outer diameter of the main portion 61. This is clearly shown with reference to Figs. 3 and 4.

When the input plunger 60 is assembled, it can be inserted into the bore 30 of the headstock with a further bias spring located on the exterior of the main body 61 between the head portion and the closing member 36 of the bore 30 of the headstock. The dimensions of the various parts and the springs are such that when the input plunger is assembled into the headstock there is an amount of axial stroke available which shall be called the freeplay and this is indicated by the reference numeral 22 in Fig. 1. In the normal condition of the device, axial motion of the input plunger 60 will take place for the distance of the freeplay after which point the ball bearings will contact the chamfered transition 31 in the headstock bore 30. The control pin is in its normal position as shown in Fig. 3 which means that the intermediate portion 66 is in contact with the ball bearings and thus prevents the ball bearings from being pushed readily inwards. The mechanism is thus blocked. It is to be noted that the free end of the tail portion of the control pin extends into and beyond the intersection with the switching bore 60 in the headstock in this condition. However, if a switching pin is inserted into the bore 33 through the switching bore 65, the control pin 62 is unable to enter this space. In this condition, the freeplay travel 22 is sufficient to prevent the forward motion of the now arrested control pin 62 to cause the input plunger radial bores 69 to align with the tail portion 65 of the control pin. Upon contacting the chamfered transition face 31 of the headstock bore 30, the balls are therefore forced readily towards the access of the input plunger 60 into the space between the main body 61 and the tail portion 65 of the control pin and no longer impede the motion of the input plunger 60 into the reduced bore portion of the headstock 40. This is shown in Fig. 4.

The amount of travel permitted by the mechanism is thus equal to the freeplay 22 and is substantially greater than any lost motion in the mechanism. This difference in available travel can be used to operate any mechanical switch system such as a lock or trigger mechanism.

It is thus apparent that the mechanism is controlled by the insertion and removal of the switching pin 72. In this embodiment, the control pin 72 is electrically activated utilising a piezo ceramic actuator 80 which is located in the space between the headstock and the housing 10. The actuator can be operated to either lift the pin out of the path of the control pin 62 or to insert it into the path, thus making the device able to operate in a power to lock or power to unlock mode.

The piezo actuator may be in the form of a piezo cantilever in the form of a planar bimorph or cantilever. Any active material may be used in a similar configuration including electro-strictors, magneto-strictors, magnetic shape memory and piezo-optic silicon materials.

## Claims

1. A mechanism for controlling the stroke of a reciprocable member, comprising
a base member (10) provided with an elongate recess (30,33),
a reciprocable member (60) located within the recess and extending from the open end of the recess,
the reciprocable member comprising first and second relatively moveable parts (61,62), one part (62) located for reciprocation within the other (61),
the said other part being provided with a transversely moveable projecting member (63),
the wall of the elongate recess (30,33) being shaped to cause the projecting member (63) to move as a result of reciprocation of the said other member, and
said one part (62) being shaped so that transverse movement of a projecting member (63) is inhibited or permitted depending on the relative positions of the one and other parts (61,62) of the reciprocable member.

2. A mechanism according to claim 1 wherein the said one part extends beyond the said other part and is arranged to engage a transversely moveable blocking pin (72) which is used to control the relative movement between the parts of the reciprocal member.

3. A mechanism according to claim 2 wherein an electrically controlled actuator (80) is connected to the blocking pin.

4. A mechanism according to claim 3 wherein the actuator is piezo ceramic actuator.

5. A mechanism according to any one of the preceding claims wherein the projecting member is in the form of a ball bearing.

6. A mechanism according to any one of the preceding claims wherein there are a plurality of projecting members.

7. A mechanism for controlling the stroke of a reciprocable member substantially as hereinbefore described with reference to the accompanying drawings.
